**Europäisches Patentamt**

**European Patent Office**

**Office européen des brevets**

(19)

(11) Veröffentlichungsnummer: **0 005 147**
**B1**

(12) **EUROPÄISCHE PATENTSCHRIFT**

(45) Veröffentlichungstag der Patentschrift: **17.06.81**

(51) Int. Cl.³: **B 60 S 1/24**

(21) Anmeldenummer: **79100496.3**

(22) Anmeldetag: **20.02.79**

(54) Wischvorrichtung für Scheiben von Kraftfahrzeugen.

(30) Priorität: **09.05.78 DE 2820104**

(43) Veröffentlichungstag der Anmeldung:
**14.11.79 Patentblatt 79/23**

(45) Bekanntmachung des Hinweises auf die Patenterteilung:
**17.06.81 Patentblatt 81/24**

(84) Benannte Vertragsstaaten:
**DE FR GB IT SE**

(56) Entgegenhaltungen:
**FR - A - 733 293**
**GB - A - 856 338**
**US - A - 2 745 130**

(73) Patentinhaber: **ROBERT BOSCH GMBH**
**Postfach 50**
**D-7000 Stuttgart 1 (DE)**

(72) Erfinder: **Kolb, Erich**
**Kirchbachstrasse 48**
**D-7580 Bühl (DE)**
Erfinder: **Laurent, Heinrich**
**22 Rue de Ribeauvillé**
**F-67100 Strasbourg (DE)**

Courier Press, Leamington Spa, England.

# Wischvorrichtung für Scheiben von Kraftfahrzeugen

## Stand der Technik

Die Erfindung geht aus von einer Wischvorrichtung nach der Gattung des Hauptanspruchs. Es ist schon eine Wischvorrichtung bekannt (FR-A-733 293), bei der ein Gelenk eines zur Wischvorrichtung gehörenden Pendelgetriebes federnd gelagert ist, damit auch bei einer Verklemmung des Wischfeldes, beispielsweise durch Ablagerungen von zur Seite gewischtem Schnee, ein Durchdrehen des Antriebsaggregats möglich und Aggregatbeschädigungen vermieden sind. Damit allerdings die Wischvorrichtung im Normalbetrieb das gesamte Wischfeld überstreicht und nicht durch die mehr oder weniger große, aber stets vorhandene Reibung zwischen Wischblatt und Scheibe gehemmt wird, muß die Gelenk-Haltefeder relativ hart ausgelegt sein. Dies führt aber dann zum vorzeitigen Ausschlagen der Gelenke des Pendelgetriebes, weil das Antriebsaggregat diese Feder bei jedem Wischblattschlag zusammendrücken muß.

## Vorteile der Erfindung

Die erfindungsgemäße Wischvorrichtung mit den kennzeichnenden Merkmalen des Hauptanspruchs hat demgegenüber den Vorteil, daß durch die Anordnung der Gelenkverbindung zwischen Kurbel und Schubstange außerhalb der durch die Kurbeldrehachse und die Achse des Gelenks zwischen Hebel und dem Doppelarmhebel definierter Ebene, wenn überhaupt, dann allenfalls eine sehr weich ausgelegte Feder erforderlich ist, um die Kurbel immer wieder in Betriebsstellung zu bringen. Im Normalbetrieb hält sich die Kurbel auch ohne Federkraft in Betriebsstellung.

Durch die in den Unteransprüchen aufgeführten Maßnahmen sind vorteilhafte Weiterbildungen und Verbesserungen der im Hauptanspruch angegebenen Wischvorrichtung möglich.

## Zeichnung

Ausführungsbeispiele der Erfindung sind in der Zeichnung dargestellt und in der nachfolgenden Beschreibung näher erläutert. Es zeigen Figur 1 die schematische Darstellung einer ersten Ausführung der Erfindung, mit einer geteilten Kurbel, Figur 2 eine Draufsicht auf die geteilte Kurbel in vergrößerter Darstellung und Figur 3 die geteilte Kurbel in Richtung des Pfeiles III gesehen.

## Beschreibung der Erfindung

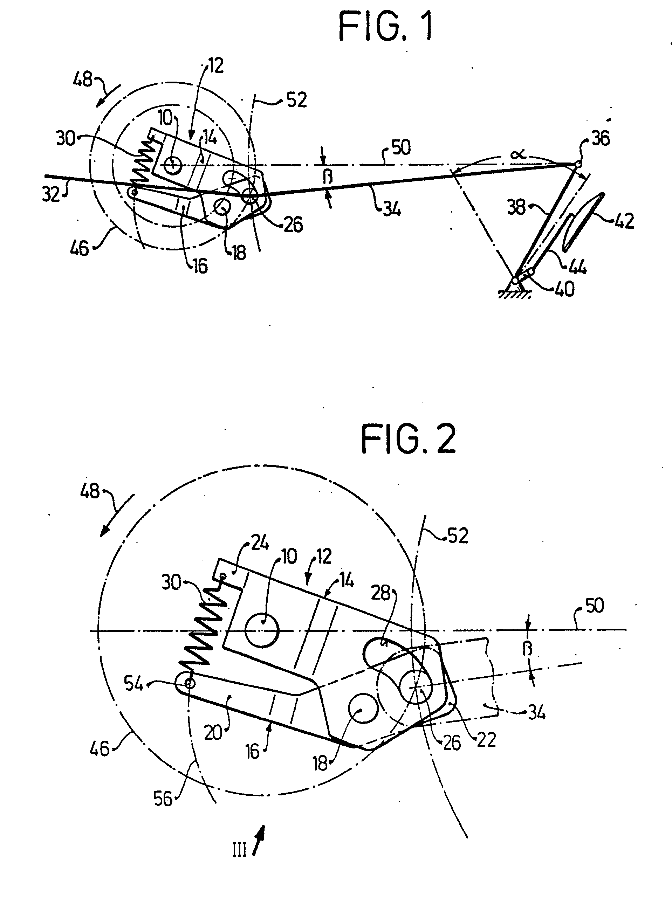

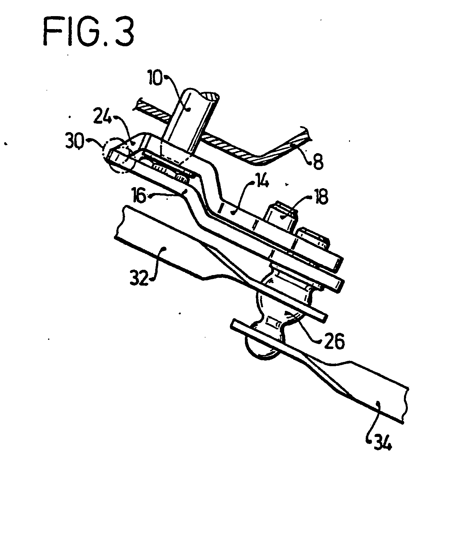

Eine in Figur 1 dargestellte Wischvorrichtung hat eine Abtriebswelle 10 eines Antriebsaggregats 8 (Figur 3), mit der eine Kurbel 12 fest verbunden ist, die Kurbel ist zweiteilig ausgeführt und weist einen mit der Abtriebswelle 10 verbundenen Hebel 14 auf, an dem ein Doppelhebel 16 über ein Gelenk 18 angelenkt ist. Die Beiden Einzelhebel 20 und 22 des Doppelhabels 16 befinden sich beidseitig des Gelenks 18. Der Hebel 14 hat einen Ansatz 24, der sich bezüglich der Abtriebswelle 10 auf die dem Gelenk 18 gegenüberliegenden Seite des Hebels 12 erstreckt. Der andere Einzelhebel 22 des Doppelhebels 16 ist gegenüber dem Einzelhebel 20 abgekröpft. Er ist im wesentlichen von dem Hebel 14 überdeckt. Der Hebel 14 und der Doppelhebel 16 befinden sich in zueinander parallelen Ebenen. Nahe dem freien Ende des Einzelhebels 22 ist dieser mit einem Kugelgelenkzapfen 26 versehen. Der Kugelgelenkzapfen 26 erstreckt sich parallel zum Gelenk 18 und durchdringt den Hebel 14 in einem Langloch 28. Das Langloch 28 ist gekrümmt ausgebildet und das Gelenk 18 bildet das Zentrum, um welches sich das Langloch 28 erstreckt. Der Doppelhebel 16 kann also gegenüber dem Hebel 14 um das Gelenk 18 verschwenkt werden, wobei der Kugelgelenkzapfen 26 in dem gekrümmten Langloch 28 bewegt wird. Die Schwenkbewegung des Doppelhebels 16 wird durch die Enden des Langlochs 28 begrenzt. Das Langloch 28 ist so angeordnet, daß es sich, abgesehen von seiner Krümmung wenigstens annähernd radial erstreckt (Figur 2). An dem Ansatz 24 des Hebels 14 ist eine Zugfeder 30 befestigt, welche mit ihrem anderen Ende fest mit dem Enbereich des Einzelhebels 20 verbunden ist.

Dabei ist die Zugfeder 30 vorgespannt, so daß der Einzelhebel 20 zum Ansatz 24 bzw. zur Abtriebswelle 10 hin gezogen wird. Diese Schwenkbewegung wird jedoch dadurch begrenzt, daß der Kugelgelenkzapfen 26 an der von der Abtriebswelle abgewandten Wand des Langlochs 28 zur Anlage kommt. Wie insbesondere Figur 3 zeigt, ist der Kugelgelenkzapfen 26 als Doppelkugelzapfen ausgebildet, an dem zwei sich nach entgegengesetzten Seiten erstrekende, mit nicht dargestellten Kugelpfannen versehene Schubstangen 32 und 34 angelenkt sind (Figur 1). Die Schwinge 38 ist mit ihrem von dem Gelenk 36 abgewandten Ende an einer Wischwerwelle 40 befestigt, mit der ein mit einem Wischblatt versehener Wischerarm 44 angebracht ist. Im Betrieb der Wischvorrichtung wird die Abtriebswelle 10 des Antriebsaggregats 8 und damit auch die Kurbel 12 umlaufend angetrieben (Figur 1). Dabei läuft der Kugelgelenkzapfen 26 auf einem Flugkreis 46 in Richtung des Pfeiles 48 um. Diese Drehbewegung des Antriebsaggregats 8 wird über die Schubstange 34, das zweite Gelenk 36 und Schwinge 38 als Pendelbewegung auf die Wischerwelle 40 übertragen. Die Schwinge 38, die Wischerwelle 40 und der Wischer 42, 44 pendeln also über einen Schwenkwinkel α. Dabei ist die Anordnung so getroffen. daß die Antriebswelle 10, das Gelenk 18 und der Kugelgelenkzapfen 26 zueinander parallel angeordnet sind. Weiter befindet sich das Gelenk 18 innerhalb des Flugkreises 46 des Kugelgelenkzapfens 26, welcher die Gelenkverbindung zwischen der Kurbel 12 und der Schubstange 34 ermöglicht. Das Gelenk 18 läuft in Drehrichtung 48 der Kurbel 12 gesehen dem Kugelgelenkzapfen 26 nach.

Wenn nun die Wischvorrichtung beispielsweise durch Schneeanhäufungen im Umkehrbereich des Wischblatts 42 blockiert wird, sucht das Antriebsaggregat 8 die Kurbel 12 nach wie vor in Richtung des Pfeiles 48 zu drehen. In dieser Stellung schließt die Schubstange 34 mit dem sogenannten Totpunktlage 50 der Schubstange 34 einen spitzen Winkel $\beta$ ein (Figur 2). Durch die Blockierung des Wischblattes und damit der Wischerwelle 40 und der Schwinge 38 kann die Schubstange lediglich noch um das zweite Gelenk 36 geschwenkt werden (Figur 1). Dabei bewegt sich die durch den Kugelgelenkzapfen 26 bewirkte Gelenkverbindung zwischen der Schubstange 34 und der Kurbel 12 auf einer Bahn 52, welche in den Flugkreis 46 des Kugelgelenkzapfens 26 eindringt und der Abtriebswelle 10 näherkommt als der Radius des Flugkreises 46. Diese Hilfsbewegung, die sich jedoch nicht in einer Bewegung des Wischers 42, 44 ausdrückt, wird durch das Langloch 28 ermöglicht, welches sich von dem Flugkreis 46 aus in Richtung auf die Abtriebswelle 10 zu erstreckt. Der Kugelgelenkzapfen 26 läuft also einmal auf seiner Bahn 52 weiter und wird gleichzeitig durch das Langloch 28 in einem bestimmten Winkel um das Gelenk 18 herumgeführt, bis die Bahn 52 des Kugelgelenkzapfens 26 wieder aus dem Flugkreis 46 heraustritt. Dabei schwenkt der Einzelhebel 20 des Doppelhebels 16 ebenfalls um das Gelenk 18, wobei sich der Befestigungspunkt 54 der Zugfeder 30 an dem Einzelhebel 20 auf einer Bahn 56 bewegt und die Zugfeder 30 weiter gespannt wird. In dem Bereich, in welchem sich die Bahn 52 des Kugelgelenkzapfens 26 innerhalb des Flugkreises 46 liegt, wird also der Doppelhebel 16 derart verschwenkt, daß der Kugelgelenkzapfen 26 entgegen der Zugspannung der Feder 30 auf die Abtriebswelle 10 zubewegt wird.

Die Kurbel 12 ist also mit einem ausschwenkbaren Kugelgelenkzapfen 26 versehen, durch den eine vorübergehende Verkleinerung des Zapfenabstandes von der Abtriebswelle erreicht wird. Der Drehpunkt des Kugelgelenkzapfens ist so gelegt, daß der Zapfen im Betrieb der Wischvorrichtung stets an einen Anschlag gedrückt ist, so daß unter Umständen die Zugfeder 30 entfallen kann. Die Ausführung gemäß der Figuren 1 bis 3 ist leicht gegen Staub und Wasser abzudichten. Ferner ist die reibung gering.

**Patentansprüche**

1. Wischvorrichtung für Scheiben von Kraftfahrzeugen, mit einer auf einer Abtriebswelle (10) eines Antriebsaggregats (8) befestigten, umlaufend angetriebenen Kurbel (12), mindestens einer ortsfest gelagerten Wischerwelle (40), an der ein Wischer (42) und eine Schwinge (38) befestigt sind, einer mit der Kurbel (12) und der Schwinge (38) gelenkig verbundenen Schubstange (34), die zusammen mit der Kurbel (12) und der Schwinge (38) ein Pendelgetriebe bildet, wobei Mittel (14, 16, 26) angeordnet sind, die beim Blockieren der Wischvorrichtung abtriebsseitig der Wischerwelle (40) ein Schwenken der Schubstangen (34) um das Gelenk (36) ermöglichen, welches die Schwinge (38) und die Schubstange (34) verbindet, wodurch ein Durchdrehen der Kurbel (12) ermöglicht wird, dadurch gekennzeichnet, daß die Kurbel (12) aus einem Hebel (14) und einem mit diesem gelenkig verbundenen Doppelarmhebel (16) besteht, welcher eine Gelenkverbindung (26) mit der Schubstange (34) aufweist und daß die Achse der Abtriebswelle (10), und die Achse des Gelenks (18) zwischen dem Hebel (14) und dem Doppelarmhebel (16) zueinander parallel angeordnet sind und daß die Gelenkverbindung (26) zwischen der Kurbel (12) und der Schubstange (34) außerhalb der durch die Kurbeldrehachse (10) und die Achse des Gelenks (18) zwischen dem Hebel (14) und dem Doppelarmhebel (16) definierten Ebene liegt.

2. Wischvorrichtung nach Anspruch 1, dadurch gekennzeichnet, daß das Gelenk (18) zwischen dem Hebel (14) und dem Doppelarmhebel (16) innerhalb des Flugkreises (46) der Gelenkverbindung (26) zwischen der Kurbel (12) und der Schubstange (34) liegt.

3. Wischvorrichtung nach einem der Ansprüche 1 oder 2, dadurch gekennzeichnet, daß das Gelenk (18) zwischen dem Hebel (14) und dem Doppelarmhebel (16) in Drehrichtung (48) der Kurbel (12) der Gelenkverbindung (26) zwischen der Kurbel (12) und der Schubstange (34) nachläuft.

4. Wischvorrichtung nach einem der Ansprüche 1 oder 2, dadurch gekennzeichnet, daß das Auslenken der Gelenkverbindung (26) gegen die Kraft einer Feder (30) erfolgt.

5. Wischvorrichtung nach Anspruch 4, dadurch gekennzeichnet, daß die Gelenkverbindung (26) zwischen der Kurbel (12) und der Schubstange (34) an dem einen Arm (22) und die Feder (30) an dem anderen Arm (20) des Doppelarmhebels (16) angreifen.

6. Wischvorrichtung nach einem der Ansprüche 4 oder 5, dadurch gekennzeichnet, daß die Feder eine Zugfeder (30) ist, welche an dem Hebel (14, 24) der Kurbel (12) angreift.

7. Wischvorrichtung nach einem der Ansprüche 1 bis 6, dadurch gekennzeichnet, daß der Schwenkwinkel des Doppelarmhebels (16) begrenzt ist.

8. Wischvorrichtung nach Anspruch 7, dadurch gekennzeichnet, daß das mit dem einen Arm (22) des Doppelarmhebels (16) verbundene Teil (26) der Gelenkverbindung zwischen der Kurbel (12) und er Schubstange (34) durch einen Durchbruch (28) des Hebels (14) greift, der die Begrenzung für den Schwenkwinkel des Doppelarmhebels (16) bewirkt.

## Claims

1. A wiper device for motor vehicle screens, comprising a rotationally driven crank (12) fixed to a driven shaft (10) of a drive unit (8), at least one fixedly mounted wiper shaft (40) to which are fixed a wiper (42) and a swivelling lever (38), a push rod (34) pivotally connected to the crank (12) and the swivelling lever (38) and which, together with the crank (12) and the swivelling lever (38), forms a reciprocating drive, wherein means (14, 16, 26) are provided which, on blocking of the wiper device on the driven side of the wiper shaft (40), enable a pivoting of the push rod (34) about the hinge (36) which connects the swivelling lever (38) to the push rod (34), whereby a cranking of the crank (12) is enabled, characterised in that, the crank (12) consists of a lever (14) and a two-armed lever (16) pivotally connected thereto, which has a pivotal connection (26) with the push rod (34), and that the axis of the driven shaft (10) and the axis of the hinge (18) between the lever (14) and the two-armed lever (16) are arranged parallel to one another, and that the pivotal connection (26) between the crank (12) and the push rod (34) lies outside the plane defined by the rotary axis (10) of the crank and the axis of the hinge (18) between the lever (14) and the two-armed lever (16).

2. A wiper device according to claim 1, characterised in that, the hinge (18) between the lever (14) and the two-armed lever (16) lies within the circular path (46) of the pivotal connection (26) between the crank (12) and the push rod (34).

3. A wiper device according to one of claims 1 or 2, characterised in that, the hinge (18) between the lever (14) and the two-armed lever (16) trails behind the pivotal connection (26) between the crank (12) and the push rod (34), in the direction of rotation (48) of the crank (12).

4. A wiper device according to one of claims 1 or 2, characterised in that, the displacement of the pivotal connection (26) takes place against the force of a spring (30).

5. A wiper device according to claim 4, characterised in that, the pivotal connection (26) between the crank (12) and the push rod (34) acts on one arm of the two-armed lever (16) and the spring (30) acts on the other arm (20) of the two-armed lever (16).

6. A wiper device according to one of claims 4 or 5, characterised in that, the spring is a tension spring (30) which acts on the lever (14, 24) of the crank (12).

7. A wiper device according to one of claims 1 to 6, characterised in that, the pivotal angle of the two-armed lever (16) is restricted.

8. A wiper device according to claim 7, characterised in that, the part (26) of the pivotal connection between the crank (12) and the push rod (34), connected to one arm (22) of the two-armed lever (16), penetrates an aperture (28) in the lever (14), which provides the restriction for the pivotal angle of the two-armed lever (16).

## Revendications

1. Dispositif d'essuie-glace de véhicules automobiles, avec une manivelle (12) fixée sur un arbre de sortie (10) d'un ensemble d'entraînement (8) et entraînée en rotation, avec au moins un arbre d'essuie-glace (40) monté à un emplacement fixe et sur lequel sont fixés un essuie-glace (42) et une biellette (38), avec une tige de poussée (34) reliée par articulation à la manivelle (12) et à la biellette (38), cette tige de poussée constituant avec la manivelle (12) et la biellette (38) un mécanisme pendulaire, des moyens (14, 16, 26) étant prévus qui, en cas de blocage du dispositif d'essuie-glace, permettent du côté sortie de l'arbre d'essuie-glace (40) un pivotement de la tige de poussée (34) autour de l'articulation (36) reliant la biellette (38) et la tige de poussée (34), ce qui permet la poursuite de la rotation de la manivelle (12), dispositif caractérisé en ce que la manivelle (12) est constituée d'un levier (14) ainsi que d'un levier à double bras (16) relié par articulation avec ce levier (14) et comportant une liaison par articulation (26) avec la tige de poussée (34), l'axe de l'arbre de sortie (10), et l'axe de l'articulation (18) entre le levier (14) et le levier à double bras (16) étant disposés parallèlement l'un à l'autre, tandis que la liaison par articulation (26) entre la manivelle (12) et la tige de poussée (34) se situe en dehors du plan défini entre le levier (14) et le levier à double bras (16) par l'axe de rotation (10) de la manivelle et l'axe de l'articulation (18).

2. Dispositif d'essuie-glace selon la revendication 1, caractérisé en ce que l'articulation (18) entre le levier (14) et le levier à double bras (16) se situe à l'intérieur de la trajectoire circulaire (46) de la liaison par articulation (26) entre la manivelle (12) et la tige de poussée (34).

3. Dispositif d'essuie-glace selon l'une quelconque des revendications 1 ou 2, caractérisé en ce que l'articulation (18) entre le levier (14) et le levier à double bras (16) suit, dans le sens de rotation (48) de la manivelle (12), la liaison par articulation (26) entre la manivelle (12) et la tige de poussée (34).

4. Dispositif d'essuie-glace selon l'une quelconque des revendications 1 et 2, caractérisé en ce que la déviation de la liaison par articulation (26) s'effectue contre l'action d'un ressort (30).

5. Dispositif d'essuie-glace selon la revendication 4, caractérisé en ce que la liaison par articulation (26) entre la manivelle (12) et la tige de poussée (34) vient en prise sur l'un des bras (22) du levier à deux bras (16) tandis que le ressort (30) vient en prise sur l'autre bras (20) de ce levier à deux bras (16).

6. Dispositif d'essuie-glace selon l'une quelconque des revendications 4 et 5, caractérisé en ce que le ressort est un ressort de traction (30) venant en prise sur le levier (14, 24) de la manivelle (12).

7. Dispositif d'essuie-glace selon l'une quelconque des revendications 1 à 6, caractérisé en ce que l'angle de pivotement du levier à deux bras (16) est limité.

8. Dispositif d'essuie-glace selon la revendication 7, caractérisé en ce que la partie (26), reliée à l'un des bras (22) du levier à deux bras (16), de la liaison par articulation entre la manivelle (12) et la tige de poussée (34), vient en prise à travers un ajour (28) du levier (14), qui assure la limitation de l'angle de pivotement du levier à deux bras (16).

# FIG. 1

# FIG. 2

# FIG.3